**Europäisches Patentamt**

**European Patent Office**

**Office européen des brevets**

(19)

(11) Veröffentlichungsnummer: **0 233 963**
**B1**

(12)

# EUROPÄISCHE PATENTSCHRIFT

(45) Veröffentlichungstag der Patentschrift:
22.08.90

(21) Anmeldenummer: 86101954.5

(22) Anmeldetag: 15.02.86

(51) Int. Cl.⁵: **H04B 7/26**, H04Q 7/04

(54) Digitales Mobilfunksystem.

(43) Veröffentlichungstag der Anmeldung:
02.09.87 Patentblatt 87/36

(45) Bekanntmachung des Hinweises auf die Patenterteilung:
22.08.90 Patentblatt 90/34

(84) Benannte Vertragsstaaten:
DE FR GB IT NL SE

(56) Entgegenhaltungen:
EP-A- 0 097 541
EP-A- 0 145 098
EP-A- 0 168 647

ONDE ELECTRIQUE, Band 64, Nr. 3, Mai–Juni 1984,
Seiten 35-40, Paris, FR; P. DEMAN: "Perspective
d'application du saut de fréquence et des techniques
AMRC aux réseaux cellulaires numériques"
ONDE ELECTRIQUE, Band 64, Nr. 3, Mai–Juni 1984,
Seiten 22-28, Argentin-sur-Creuse, FR; M. MOULY et al.:
"Etude comparative de quelques protocoles d'accès
multiple pour les systèmes radio mobiles"

(73) Patentinhaber: ANT Nachrichtentechnik GmbH,
Gerberstrasse 33, D-7150 Backnang(DE)

(72) Erfinder: Sperich, Josef, Dipl.-Ing., Kelterweg 52,
D-7150 Backnang(DE)

## Beschreibung

Die vorliegende Erfindung betrifft ein digitales Mobilfunksystem, bestehend aus Funkvermittlungsstellen und Feststationen, welche von den Funkvermittlungsstellen kommende Signalkanäle an mobile Teilnehmer aussenden und von den mobilen Teilnehmern abgegebene Signalkanäle empfangen und sie an die Funkvermittlungsstellen weiterleiten, wobei in jeder Funkvermittlungsstelle ein Koppelfeld vorhanden ist, welches jeweils mehrere Signalkanäle in einen Zeitmultiplex-Rahmen einfügt und die in Rahmen zusammengefaßten Signalkanäle an die der Funkvermittlungsstelle zugeordneten Feststationen weiterleitet, in denen mehrere, die Zeitmultiplex-Rahmen ausstrahlende, auf verschiedene Teilfrequenzbänder abgestimmte Sender vorhanden sind, und wobei das Koppelfeld die Signalkanäle, welche von mehreren auf verschiedene Teilfrequenzbänder abgestimmten Empfängern in den Feststationen empfangen werden, auf signalverarbeitende Einrichtungen in der Funkvermittlungsstelle aufteilt.

Ein derartiges digitales Mobilfunksystem wurde in der deutschen Patentanmeldung P 35 02 942.0 vorgeschlagen.

Ein Mobilfunksystem ermöglicht es, daß mobile Teilnehmer untereinander oder mit am öffentlichen Fernsprechnetz oder an einem Datennetz angeschlossenen Teilnehmern Informationen austauschen können. Das zu versorgende Funkgebiet, in dem sich die mobilen Teilnehmer aufhalten, ist dabei in Funkzellen eingeteilt. In jeder Funkzelle befindet sich eine Feststation, die die Funkverbindung mit den mobilen Teilnehmern herstellt. Die Zellengröße wird unter Berücksichtigung der Zahl der zur Verfügung stehenden Funkkanäle der mobilen Teilnehmerzahl angepaßt, so daß sich für eine größere Dichte der mobilen Teilnehmer kleinere Zellen bei entsprechend reduzierter Sendeleistung ergeben. Mehrere solcher Zellen mit ihren Feststationen sind jeweils einer Funkvermittlungsstelle zugeordnet.

Die Funkvermittlungsstellen besitzen neben den Schnittstellen zu den Feststationen weitere Schnittstellen zum öffentlichen Fernsprechnetz und in der Regel auch zu einem Datennetz. Besagte Funkvermittlungsstellen wickeln Prozeduren ab beim Anmelden, Registrieren, Suchen, Weiterreichen von Signalkanälen, Aktualisieren der Standorte der mobilen Teilnehmer sowie Auf- und Abbau von Sprach- und Datenübertragungen. Die Funkvermittlungsstellen haben bezogen auf die mobilen Teilnehmer folgende Funktionen:

Jeder mobile Teilnehmer ist einer Heimat-Funkvermittlungsstelle zugeordnet, in der er mit seiner Adresse registriert ist. Der Aufenthaltsort des mobilen Teilnehmers wird ständig in seiner Heimat-Funkvermittlungsstelle aktualisiert, so daß die Funkvermittlungsstelle, in deren Bereich sich der mobile Teilnehmer gerade aufhält, in der Heimat-Funkvermittlungsstelle stets bekannt ist.

Während der mobile Teilnehmer sich im Bereich einer Funkvermittlungsstelle, über die augenblicklich der Gesprächs- und Datenaustausch abläuft, aufhält, werden auch Informationen über die Empfangsqualitäten benachbarter Funkvermittlungsstellen ausgetauscht zur Vorbereitung für einen Wechsel des mobilen Teilnehmers in den Funkverkehrsbereich einer anderen Funkvermittlungsstelle.

Die erste Funkvermittlungsstelle, mit der der mobile Teilnehmer zu Anfang des Funkverkehrs Verbindung aufgenommen hat, führt während der ganzen Zeit des Funkverkehrs übergeordnet Regie.

Alle Funkvermittlungsstellen sind über das Datennetz oder das Fernsprechnetz miteinander verbunden und tauschen darüber Daten aus, welche der Organisation und Verwaltung des gesamten Mobilfunknetzes dienen.

Bei bestimmten Frequenzen, mit denen die Informationen (Sprache, Daten) zwischen mobilen Teilnehmern und Feststationen übertragen werden, kommt es in manchen geographischen Lagen durch Mehrwegeausbreitung hin und wieder am Empfangsort (beim mobilen Teilnehmer oder bei der Feststation) zu einer fast vollständigen Signalauslöschung, auch Fading genannt.

Gerade wenn solche Fadings häufig und von längerer Dauer auftreten, muß die Funkverbindung wegen zu großer Informationsverluste abgebrochen werden.

Es ist Aufgabe der Erfindung ein digitales Mobilfunksystem der eingangs genannten Art anzugeben, das unter Einsatz geringen Aufwandes die durch Fadings entstehenden Unterbrechungen der Funkverbindung zwischen mobilen Teilnehmern und Feststationen so weit wie möglich vermeidet.

Erfindungsgemäß wird diese Aufgabe durch die im Kennzeichen des Anspruchs 1 angegebenen Merkmale gelöst.

Zweckmäßige Ausführungen der Erfindung gehen aus denUnteransprüchen hervor.

Der erfindungsgemäße Einsatz des Koppelfeldes in der Funkvermittlungsstelle ermöglicht eine sehr flexible an die jeweiligen Funkverkehrsbedürfnisse angepaßte Zuordnung der Signalkanäle zwischen der Funkvermittlungsstelle und den Feststationen. Außerdem bringt die Erfindung den Vorteil mit sich, daß der größte Teil der Einrichtungen für die Herstellung und Organisation der Daten- und Sprechverbindungen in den Funkvermittlungsstellen konzentriert werden kann und nicht all die vielen Feststationen mit solchen Einrichtungen ausgestattet werden müssen. Die Feststationen sind also mit geringerem Schaltungsaufwand realisierbar und können daher einfacher an wachsende Teilnehmerzahlen angepaßt werden.

Anhand von in der Zeichnung dargestellten Ausführungsbeispielen wird nun die Erfindung näher erläutert. Es zeigen:

Fig. 1 einen Signalrahmenaufbau,
Fig. 2 den Aufbau von Organisationskanälen,
Fig. 3 das Funktionsschema eines mobilen Teilnehmers,
Fig. 4 das Funktionsschema einer Funkvermittlungsstelle,
Fig. 5 das Funktionsschema eines Koppelfeldes mit Übertragungseinrichtungen zu den Sendern und Empfängern einer Feststation und
Fig. 6 ein Beispiel für eine sprungweise Zuordnung von 6 Teilfrequenzbändern zu mehreren mobilen Teilnehmern.

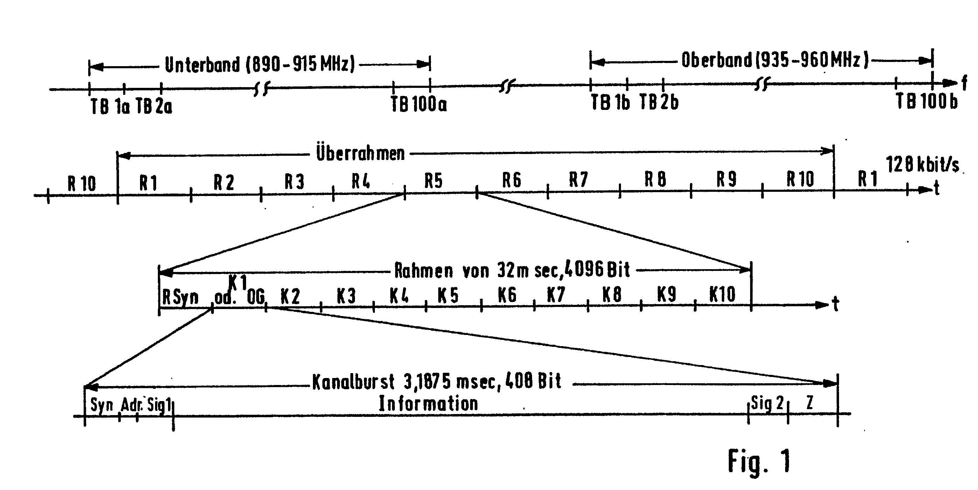

Wie die Fig. 1 verdeutlicht, sind bei dem hier betrachteten Ausführungsbeispiel eines Mobilfunksystems zwei Frequenzbänder für die Signalübertragung vorgesehen. Ein 25 MHz breites Unterband (890 MHz - 915 MHz) ist für die Signalübertragung von den mobilen Teilnehmern zu den Feststationen und ein ebenfalls 25 MHz breites Oberband (935 MHz - 960 MHz) für die Signalübertragung von den Funkvermittlungsstellen bzw. deren zugeordneten Feststationen zu den mobilen Teilnehmern vorgesehen. Dabei ist hier das Unter- und das Oberband z.B. in jeweils 100 Teilfrequenzbänder TB1a ... TB100a, TB1b ... TB100b unterteilt.

Je ein Teilfrequenzband gleicher Ordnungszahl im Unter- und Oberband wird von einem Zeitmultiplexsystem mit Vielfachzugriff, von einem sogenannten TDMA-System, belegt.

Ein nach dem Prinzip des Zeitmultiplex mit Vielfachzugriff aufgebauter Rahmen (TDMA-Rahmen) R1 ... R10 enthält bei dem vorliegenden Ausführungsbeispiel 10 blockweise aneinandergereihte Signalkanäle K1 ... K10. Die Rahmendauer beträgt dabei 32 ms. Am Anfang des Rahmens steht ein Rahmensynchronwort RSyn, das auch die Rahmennummer enthält und von den Feststationen an die mobilen Teilnehmer mit übertragen wird. Aus z.B. 10 solchen Rahmen R1 ... R10 läßt sich ein Überrahmen bilden, wie die Fig. 1 zeigt. So braucht ein mobiler Teilnehmer beispielsweise einen Anruf von derjenigen Feststation, bei der er sich gerade angemeldet hat, nur in einem Rahmen zu erwarten, der mit der Nummer seiner Teilnehmer-Endziffer übereinstimmt, und kann - solange keine Verbindung aufgebaut ist - in der anderen Zeit, nämlich während die anderen neun Rahmen übertragen werden, die Empfangsqualität von anderen Feststationen ermitteln und sich gegebenenfalls ummelden (Roaming).

Neben den Nutzsignalkanälen K1 ... K10, also denen mit der eigentlichen Sprach- oder Dateninformation, gibt es noch einen Organisationskanal OG, der nur an Stelle z.B. des ersten Kanals K1 eines Rahmens in einen oder einigen wenigen Teilfrequenzbändern übertragen wird. In allen anderen Teilfrequenzbändern ist jeweils der erste Kanal der Rahmen mit Nutzinformation belegt.

Während von den Feststationen alle Signalkanäle in kontinuierlicher Folge wiederkehrend zu den mobilen Teilnehmern ausgesendet werden, dürfen in der Gegenrichtung die mobilen Teilnehmer nur in den ihnen zugeteilten Kanalzeiten burstweise senden. Der Burst eines Nutzinformation enthaltenden Kanals ist, wie der Fig. 1 zu entnehmen ist, folgendermaßen aufgebaut: Der Kanalburst beginnt mit einem Synchronwort Syn, dem sich ein Adresswort Adr anschließt. Darauf folgt ein erster Teil einer sprach- oder datenbegleitenden Signalisierung Sig1. Diese Signalisierung, auch Inbandsignalisierung genannt, enthält z.B. Informationen über Gebühreneinheiten, über Sendeleistungseinstellungen, über Zuweisungen zu neuen Teilfrequenzbändern, über Umschaltungen von Sprache auf Daten, Quittierungen etc.. Die überwiegende Anzahl der Bits im Kanalburst wird von der eigentlich zu übertragenden Sprach- oder Dateninformation belegt. Der Sprach- oder Dateninformation schließt sich der zweite Teil der Signalisierung Sig2 an. Am Burstende ist ein Bitblock Z vorgesehen, der in der Übertragungsrichtung von den Feststationen zu den mobilen Teilnehmern Systeminformation enthalten kann und in der Übertragungsrichtung von den mobilen Teilnehmern zu den Feststationen für den Ausgleich der verschiedenen Laufzeiten der ausgesendeten Signalkanäle ausgenutzt wird.

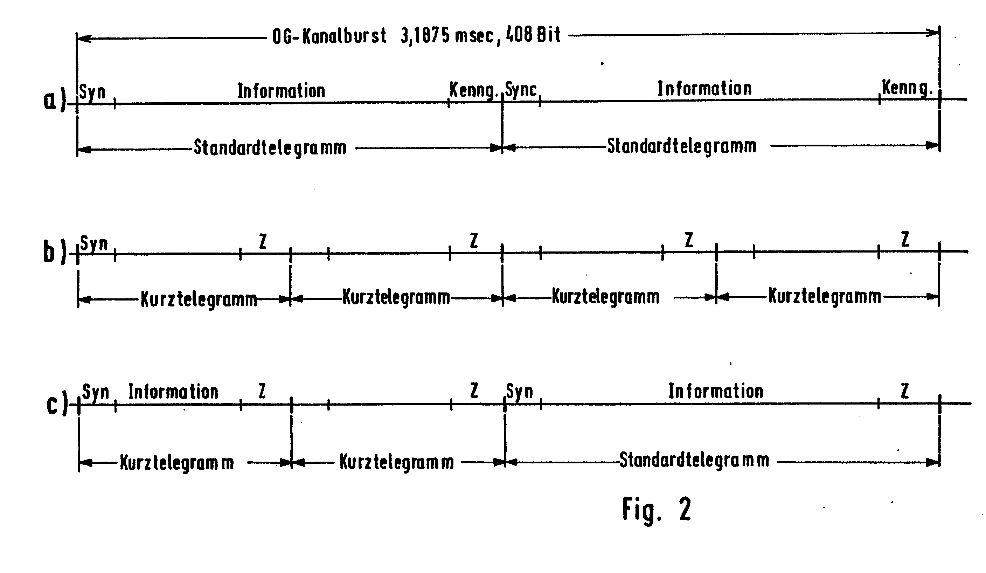

Die Struktur eines Organisationskanalbursts zeigt die Fig. 2. Dabei geht aus dem Diagramm a) der Aufbau eines Organisationskanalbursts, der von den Feststationen zu den mobilen Teilnehmern übertragen wird, hervor. Dieser Organisationskanalburst ist in zwei gleich lange Teilbursts aufgeteilt, die zwei voneinander unabhängige Standardtelegramme enthalten. Jedes Standardtelegramm beginnt mit einem Synchronwort Syn, dem ein Informationsteil und eine Kennung der sendenden Feststation folgen. Im Informationsteil können Anweisungen einer Feststation an einen mobilen Teilnehmer, ein Ruf oder eine Quittung über ein empfangenes Telegramm, enthalten sein.

Das Diagramm b) gibt den Aufbau eines Organisationskanalbursts wieder, der in TDMA-Rahmen ungerader Ordnungszahl von den mobilen Teilnehmern zu den Feststationen übertragen wird. Dieser Organisationskanalburst ist in 4 Teilblöcke für Kurztelegramme unterteilt, die mit einem Synchronwort Syn beginnen, einen Informationsteil für die gekürzte Teilnehmernummer des sich meldenden mobilen Teilnehmers und am Ende einen Bitblock Z für den Laufzeitausgleich enthalten.

Die Struktur eines in Rahmen gerader Ordnungszahl eingefügter Organisationskanalbursts ist dem Diagramm c) in Fig. 2 zu entnehmen. Hier ist der Organisationskanalburst in zwei Teilblöcke für Kurztelegramme und einen Teilblock für ein Standardtelegramm unterteilt. Der Teilblock für das Standardtelegramm darf nur auf Anweisung der Funkvermittlungsstellen von einem mobilen Teilnehmer belegt werden und dient der Übermittlung der vom mobilen Teilnehmer abzusetzenden Information, z.B. der Wählziffern für eine gewünschte Verbindung, der Einbuchung in eine neue Feststation bzw. Funkvermittlungsstelle, von Quittungen u.ä..

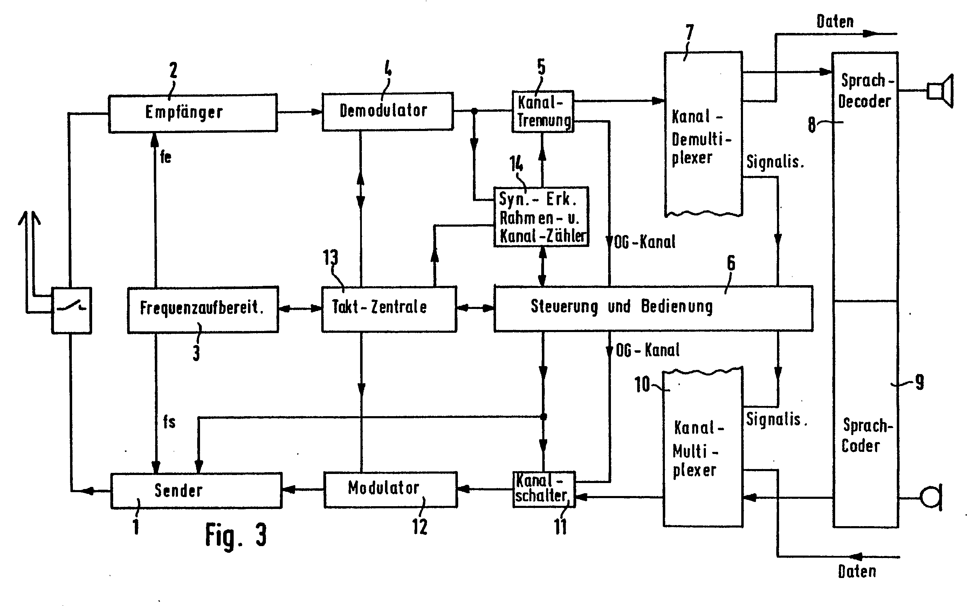

Die Fig. 3 zeigt eine Ausführung der Sende-Empfangsanordnung eines mobilen Teilnehmers. Der Sender 1 und der Empfänger 2 können von einer Frequenzaufbereitungseinrichtung 3 auf die Sendefrequenz $f_s$ und die Empfangsfrequenz $f_e$ jedes von den Feststationen angewiesenen Teilfrequenzbandes einer im Frequenzsprungverfahren durchlaufenden Sequenz von Teilfrequenzbändern im Oberband und im Unterband eingestellt werden. Empfangen und in einem Demodulator 4 demoduliert werden kontinuierlich zunächst alle Kanäle des Rahmens im gerade vorliegenden Teilfrequenzband. Eine Einrichtung 5 trennt von allen übertragenen Kanälen denjenigen von der Funkvermittlungsstelle dem mobilen Teilnehmer zugewiesenen Kanal ab und leitet diesen, falls es ein Organisationskanal ist, an eine Steuerungs- und Bedieneinheit 6 und, falls es ein Nutzsignalkanal ist, an einen Kanaldemultiplexer 7 weiter. Der Kanaldemultiplexer 7 führt Sprachsignale einem Sprachdekodierer 8 zu, gibt Datensignale auf einen Datenausgang und leitet Signalisierungsinformation an die Steuerungsund Bedieneinheit 6 weiter.

In Senderichtung werden die von einem Sprachkodierer 9 kommenden Sprachsignale oder die an einem Dateneingang anliegenden Datensignale und von der Steuerungs- und Bedieneinheit gelieferte Signalisierungsinformation in einem Kanalmultiplexer 10 zu einem Kanalburst zusammengefaßt. Ein Kanalschalter 11 schaltet entweder diesen die Nutzinformation enthaltenden Kanal oder ein Kurz- oder Standardtelegramm, das von der Steuerungs- und Bedieneinheit 6 bereitgestellt wird, im Organisationskanal auf einen Modulator 12, der sein Ausgangssignal an den Sender 1 weitergibt.

Die Sende-Empfangsanordnung des mobilen Teilnehmers enthält noch eine Takt-Zentrale 13 und eine Einrichtung 14, welche die Synchronworte zu Beginn der Rahmen und der Kanalbursts erkennt und die Kanäle und Rahmen zählt, bzw. die jeweils empfangene Rahmennummer übernimmt, wenn das Rahmensynchronwort korrekt empfangen wurde.

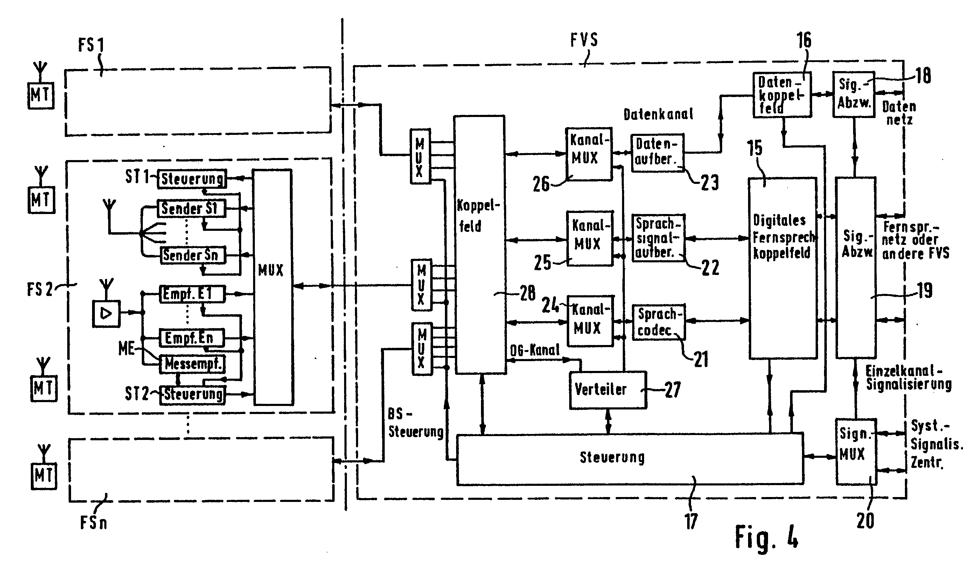

Die Fig. 4 zeigt eine Funkvermittlungsstelle FVS mit mehreren daran angeschlossenen Feststationen FS1, FS2 ... FSn. Die Feststationen FS1, FS2 ... FSn besitzen mehrere Sender S1 .. Sn und Empfänger E1 ... En, deren Zahl dem Verkehrsaufkommen angepaßt ist. Jedem Sender ist ein Teilfrequenzband im Oberband (935 MHz - 960 MHz) und jedem Empfänger ein Teilfrequenzband im Unterband (890 MHz - 915 MHz) zugeordnet. Die Sender S1 ... Sn strahlen in ihren Teilfrequenzbändern kontinuierlich die in TDMA-Rahmen aneinandergereihten Kanäle ab. Die Empfänger E1 ... En empfangen burstweise die Signalkanäle von den in ihren Teilfrequenzbändern sendenden mobilen Teilnehmern MT, führen einen Laufzeitausgleich zwischen den Signalkanälen durch und fügen sie in Empfangsrahmen ein, welche auf das Senderahmenraster normiert sind.

Zur Bestimmung an welche Funkzelle und deren zugehörige Feststation ein mobiler Teilnehmer während einer Signalübertragung weitergereicht werden soll, ist in jeder Feststation ein Meßempfänger ME vorhanden. Dieser Meßempfänger ME kann auf alle Teilfrequenzbänder des Unterbandes eingestellt werden, um die Übertragungsqualität von Signalkanälen der mobilen Teilnehmer, die mit Nachbarfeststationen kommunizieren, zu ermitteln. An Hand dieser Meßwerte kann dann die Entscheidung getroffen werden, auf welche Feststation der mobile Teilnehmer umgeschaltet werden soll.

In den Feststationen vorhandene Steuerungen ST1 und ST2 übernehmen die Betriebssteuerung und Überwachung der Sender und Empfänger, sowie die Einstellung und Auswertung der Meßergebnisse der Meßempfängers.

Die Funkvermittlungsstelle FVS ist mit einem an das öffentliche Fernsprechnetz angeschlossenen digitalen Fernsprechkoppelfeld 15 und einem an ein Datennetz angeschlossenen Datenkoppelfeld 16 ausgestattet. Nutzkanalbegleitende Signalisierungskanäle sowie zentrale Signalisierungskanäle für die Herstellung der Fernsprech- und Datenverbindungen als auch Systemsignalisierungskanäle für das Management des Mobilfunknetzes werden einer Steuerung 17 über Signalabzweiger 18, 19 und einen Signalisierungskanalmultiplexer 20 zugeführt. Die genannte Steuerung 17 legt die durchzuschaltenden Wege fest und ermöglicht folgende Verbindungskombinationen:

a) Über das digitale Fernsprechkoppelfeld 15

- von einem Sprachkodierer, -dekodierer 21 zum Fernsprechnetz und dessen Teilnehmern, gegebenenfalls über eine andere Funkvermittlungsstelle,
- von einer Einrichtung 22 zur Sprachsignalaufbereitung, die z.B. das Sprachsignal in eine andere Bitrate umsetzt oder eine Signal-Paketierung vornimmt, zu einer ähnlichen Einrichtung einer anderen Funkvermittlungsstelle über das Fernsprechnetz oder direkt zu dieser Funkvermittlungsstelle.

b) Über das Datenkoppelfeld 16

- von einer Einrichtung 23 zur Datensignalaufbereitung, die z.B. das Datensignal in eine andere Bitrate umsetzt oder eine Paketierung der Daten vornimmt, direkt zum leitungs- oder paketvermittelnden Datennetz und dessen Teilnehmer oder über eine andere Funkvermittlungsstelle zum Datennetz.

Der Sprachkodierer, -dekodierer 21 und die Einrichtungen 22 und 23 zur Sprachsignalaufbereitung und Datenaufbereitung sind jeweils mit einem Kanalmultiplexer 24, 25, 26 verbunden. Die Kanalmultiplexer 24, 25 und 26 erhalten auf Abruf die Sprach- bzw. Dateninformation burstweise und fügen entsprechend dem in Fig. 1 dargestellten Diagramm dieser eigentlichen Nutzinformation das Kanal-Synchronwort, die Kanaladresse und die Signalisierung zu. Das Kanal-Synchronwort, die Kanaladresse und die Signalisierung stellt die Steuerung bereit und ein Verteiler 27 leitet diese Zusatzinformationen an die entsprechenden Kanalmultiplexer 24, 25 und 26 weiter.

Ein Koppelfeld 28 übernimmt auf Abruf die Kanalburst der Kanalmultiplexer 24, 25, 26 und fügt sie zeitlich gestaffelt zusammen mit einem Rahmensynchronwort gemäß dem in Fig. 1 gezeigten Schema in einen TDMA-Rahmen ein. Dieser kann als einzelner Rahmen einem Sender in einer Feststation oder es können mehrere solcher Rahmen über ein System von Multiplexern MUX den Sendern der Feststationen zugeführt werden.

In Gegenrichtung erhält das Koppelfeld 28 die von den mobilen Teilnehmern ausgesendeten und von den Empfängern der Feststationen empfangenen Kanalbursts direkt oder auch über ein System von Multiplexern und verteilt sie auf die entsprechenden Kanalmultiplexer 24, 25 und 26. Die Steuerung 17 legt fest, auf welchen Kanalmultiplexer und in welchem Zeitschlitz die einzelnen Kanalbursts durchgeschaltet werden sollen. Ebenso liefert die Steuerung 17 die für die mobilen Teilnehmer bestimmten Organisationskanäle OG (vgl. Fig. 2) an das Koppelfeld 28 und nimmt über den Verteiler 27 die im Koppelfeld eingegangenen Organisationskanäle auf.

Wenn kein Sprach- oder Datensignal für einen Kanal im TDMA-Rahmen vorliegt, belegt das Koppelfeld 28 diesen Kanal mit einem Kanal-Synchronwort und mit anschließender statistischer Information.

Die auf Abruf burstweise vom Sprachkodierer 21, der Einrichtung 22 zur Sprachsignalaufbereitung oder Einrichtung 23 zur Datenaufbereitung an einen Kanalmultiplexer 24, 25, 26 und von diesem unmittelbar weiter an das Koppelfeld 28 übergebene Information wird ohne Zeitverzug im TDMA-Rahmen weitergereicht und auch unmittelbar gesendet. Durch das zeitgerechte Bereitstellen der Kanalbursts durch die Kanalmultiplexer 24, 25, 26 und das sofortige Weiterreichen über das Koppelfeld 28 zum Sender entsteht keine und bei Verwendung des zwischen der Funkvermittlungsstelle FVS und den Feststationen FS1 ... FSn eingesetzten Systems von Multiplexern MUX nur eine geringe Signalverzögerung.

Das genannte und im folgenden noch näher beschriebene Koppelfeld 28 ist in der Lage, Kanalbursts auf beliebige Sender in beliebigen an die Funkvermittlungsstelle angeschlossenen Feststationen durchzuschalten. Das Koppelfeld schaltet nach dem unten noch näher beschriebenen Frequenzsprungverfahren die von der Funkvermittlungsstelle kommenden, für die mobilen Teilnehmer bestimmten Signalkanäle an die auf verschiedene Teilfrequenzbänder abgestimmten Sender der Feststationen durch und führt die von den auf verschiedene Teilfrequenzbänder abgestimmten Empfängern empfangenen Signalkanäle in einer festgelegten zeitlichen Folge den signalverarbeitenden Einrichtungen der Funkvermittlungsstelle zu. Auch das Weiterreichen (Hand off) eines mobilen Teilnehmers von einer Funkzelle zur nächsten übernimmt das Koppelfeld 28 auf entsprechende Anweisung der Steuerung 17.

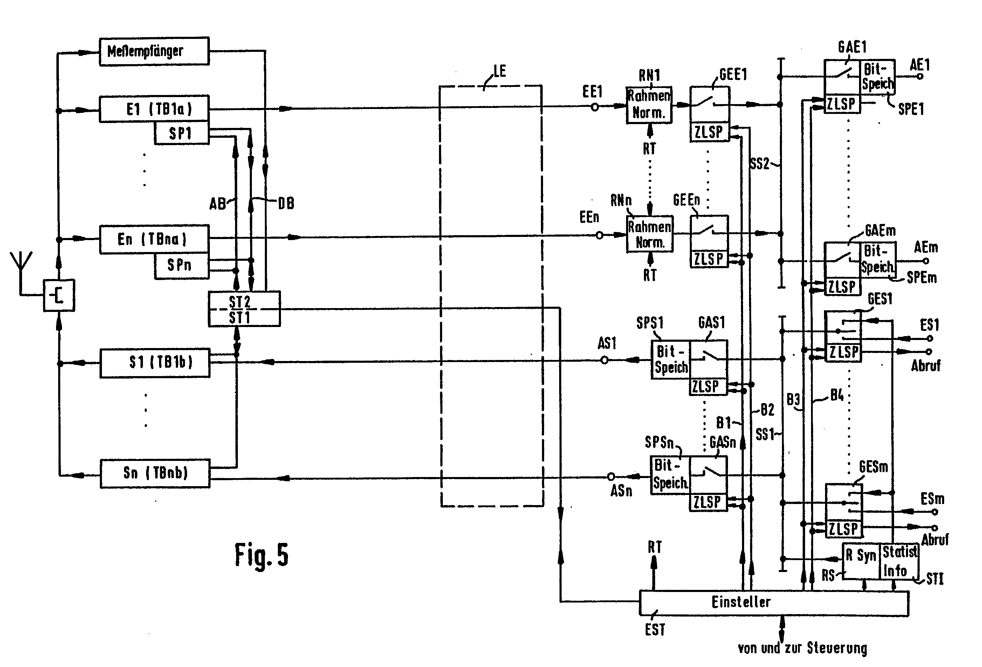

Das in Fig. 5 dargestellte Koppelfeld besitzt zwei Sammelschienen SS1 und SS2. An die erste Sammelschiene SS1 sind über Gatter GAS1 ... GASn Ausgänge AS1 ... ASn angeschlossen, die mit den feststationsseitigen Sendern verbunden sind, wobei hier n der Zahl der in einer Feststation vorhandenen Sender-Teilfrequenzbänder entspricht. Ebenfalls an diese erste Sammelschiene SS1 sind Eingänge ES1 ... ESm zur Übernahme der von der Funkvermittlungsstelle bereitgestellten Signalkanäle über Gatter GES1 ... GESm angeschlossen. Bei z.B. 10 Signalkanälen pro Sende- bzw. Empfänger-Teilfrequenzband und n solchen Sender- bzw. Empfänger-Teilfrequenzbänder wird m = 10n.

An die zweite Sammelschiene SS2 sind n Eingänge EE1 ... EEn zur Übernahme der von den Feststationen empfangenen Signalkanäle über Gatter GEE1 ... GEEn angeschlossen, wobei n der Zahl der in einer Feststation vorhandenen Empfänger-Teilfrequenzbänder entspricht. Außerdem sind an die zweite Sammelschiene SS2 Ausgänge AE1 ... AEm zur Übergabe der von den Feststationen kommenden Signalkanäle an die signalverarbeitenden Einrichtungen der Funkvermittlungsstelle über Gatter GAE1 ... GAEm angeschlossen.

Jedes der an die Sammelschienen SS1 und SS2 angeschlossenen Gatter ist mit einem Zeitlagenspeicher ZLSP verbunden. In die Zeitlagenspeicher werden über BUS-Leitungen B1 und B3 die für die Durchschaltung vorgesehenen Zeitlagen eingeschrieben. Die Zeitlagenspeicher steuern die zugehörigen Gatter in Koinzidenz der eingeschriebenen und der über die BUS-Leitungen B2 bzw. B4 von einem Einsteller EST gemäß Zeitlagen- und Rahmenstruktur fortlaufend generierten Zeitlagenadressen zur Durchschaltung an. Dadurch können die Gatter die zugehörigen Ein- bzw. Ausgänge an die Sammelschienen durchschalten. Jedem der feststationsseitigen Eingänge EE1 ... EEn und Ausgänge AS1 ... ASn ist eine Zeitlage zugeordnet, die mindestens die Rahmendauer beibehalten wird.

Während der in die Zeitlagenspeicher ZLSP eingeschriebenen Zeitlagen verbindet jeweils das Gatter GAS1 ... GASn die erste Sammelschiene SS1 mit einem Bitspeicher SPS1 ... SPSn, so daß der zu dem mit der Zeitlage übereinstimmenden Zeitpunkt auf der Sammelschiene SS1 anstehende Signalzustand (1 oder 0) in den Bitspeicher übernommen werden kann, wo er bis zum Ende des Rahmentaktes als zu übertragendes Bit gespeichert und dann ausgesendet wird.

Die an den feststationsseitigen Eingängen EE1 .. EEn anliegenden, von den Feststationen kommenden Signalkanäle werden Mittels an die Eingänge geschaltete Einrichtungen RN1 ... RNn zeitlich auf einen Durchschaltrahmen normiert, d.h. es wird darin eine gegebenenfalls auftretende unterschiedliche Laufzeit auf dem Übertragungsweg zwischen den Empfängern E1 bis En der Feststationen und den Gattern GEE1 bis GEEn ausgeglichen. Von dem Einsteller EST, der mit der Steuerung der Vermittlungsstelle in Verbindung steht, erhalten die Einrichtungen RN1 ... RNn zur Rahmennormierung den Rahmentakt RT, der den Beginn des Rahmens für die Durchschaltung auf die Sammelschiene SS2 festlegt. Die Gatter GEE1 ... GEEn verbinden zum Zeitpunkt der ihnen zugeordneten Zeitlage die Ausgänge der Normierungseinrichtungen RN1 ... RNn mit der Sammelschiene SS2.

In die Zeitlagenspeichern ZLSP an mit den Kanalmultiplexern 24, 25, 26 und dem Organisationskanalverteiler 27 der Funkvermittlungsstelle FVS verbundenen Eingängen ES1 ... ESm werden neben den Bit-Durchschaltezeitlagen zusätzlich noch die Kanalzeiten eingegeben, d.h. die Gatter GES1 ... GESm bzw. GAE1 ... GAEm schalten die Eingänge ES1 ... ESm bzw. Ausgänge AE1 ... AEm nur während der adressierten Kanalzeit in der ebenfalls adressierten Bit-Durchschaltezeitlage auf die Sammelschienen SS1 bzw. SS2 durch. Die Bit- und Kanalzeitlage wird mindestens für eine Kanalzeit beibehalten.

Bitspeicher SPE1 ... SPEm an den Ausgängen AE1 ... AEm der zweiten Sammelschiene SS2 speichern jeden von ihr übernommenen Signalzustand bis zum Ende des Bittaktes und geben ihn dann aus an die signalverarbeitenden Einrichtungen in der Funkvermittlungsstelle.

Die Zeitlagenspeicher ZLSP der mit den Eingängen ES1 ... ESm der ersten Sammelschiene SS1 verbundenen Gatter GES1 ... GESm geben während der adressierten Kanalzeit Abrufsignale an die Kanalmultiplexer 24, 25, 26 und den Organisationskanalverteiler 27 ab, die dann die der jeweiligen Kanalzeit zugeordneten Kanalbursts an die abrufenden Eingänge ES1 ... ESm weitergeben.

Ein Abrufsignal besteht aus einer Pulsfolge, die soviele Impulse enthält wie innerhalb einer Zeitlage an Signalbits von einem der Kanalmultiplexer 24, 25, 26 oder dem Organisationskanalverteiler 27 abzugeben sind.

Die nach Abruf an den Eingängen ES1 ... ESm bereitstehenden Kanalbursts werden von den Gattern GES1 ... GESm an die erste Sammelschiene SS1 durchgeschaltet. Diese Gatter GES1 ... GESm können ebenfalls zu frei adressierbaren Kanalzeiten statistische Information und Kanalsynchronworte, die ein Generator STI bereitstellt, an die erste Sammelschiene SS1 durchschalten. Dadurch kann jeder Kanal im auszusendenden TDMA-Rahmen, falls keine Sprach- oder Dateninformation vorliegt, mit einem Kanalsynchronwort und statistischer Information belegt werden, wodurch den Empfängern der mobilen Teilnehmer die Taktrückgewinnung und Empfängerüberwachung erleichtert wird.

Das Rahmensynchron- und Rahmenzählwort wird von einem Rahmensynchrongenerator RS zeitgerecht auf die erste Sammelschiene SS1 geschaltet und von allen Gattern GAS1 bis GASn an die Ausgänge AS1 bis ASn durchgereicht. Die Durchschaltezeitlagen werden vom Einsteller EST mittels eines Binärzählers aus dem Rahmentakt RT abgeleitet und allen Zeitlagenspeichern ZLSP über die BUS-Leitungen B2 bzw. B4 zugeführt.

Außerdem liefert der Einsteller EST den Kanaltakt an alle Eingangs- und Ausgangsschaltungen.

Beim in Fig. 5 gezeigten Ausführungsbeispiel sind die Ausgänge des Koppelfeldes AS1 bis ASn mit Sendern S1 bis Sn und die Eingänge EE1 bis EEn mit Empfängern E1 bis En einer Feststation verbunden. Ferner sind die Steuerungen ST1 und ST2 der Feststation mit dem Einsteller EST des Koppelfeldes und über diesen mit der Steuerung der Funkvermittlungsstelle, in der sich das Koppelfeld befindet, verbunden.

Sofern die Feststation von der Funkvermittlungsstelle in größerer Entfernung installiert ist, ist es zweckmäßig, in die Verbindungsleitungen zwischen den Feststationen und dem Koppelfeld der Funkvermittlungsstelle Leitungsausrüstungen LE (in Fig. 5 strichliert angedeutet) einzufügen, welche mit Entzerrern, Codewandlern, Signalregeneratoren etc. ausgestattet sind.

Wie bereits oben ausgeführt, ist jeder Sender S1 ... Sn in der Feststation auf eines der Teilfrequenzbänder TB1b ... TBnb und jeder der Empfänger E1 ... En auf eines der Teilfrequenzbänder TB1a ... TBna abgestimmt. Dabei ist die Sequenz von Sender-Teilfrequenzbändern TB1b ... TBnb gegenüber der Sequenz von Empfänger-Teilfrequenzbändern TB1a ... TBna um einen festen Frequenzabstand versetzt.

Diese Mehrzahl von auf verschiedenen Teilfrequenzbändern abgestimmten Sendern und Empfängern in einer Feststation erlaubt es nun, ein Frequenzsprungverfahren mit jedem mobilen Teilnehmer, der sich gerade im Funkverkehrsbereich dieser Feststation aufhält, durchzuführen. D.h. die Übertragung der Signalkanäle zwischen der Feststation und einem mobilen Teilnehmer erfolgt in Abständen von jeweils einer TDMA-Rahmendauer auf einem anderen der Teilfrequenzbänder TB1b ... TBnb bzw. TB1a ... TBna. Mit Hilfe des in Fig. 5 dargestellten Koppelfeldes läßt sich das Frequenzsprungverfahren auf einfache Weise mit wenig Aufwand realisieren. Wie weiter oben dargelegt, ist das Koppelfeld in der Lage, über seine Gatter jeden beliebigen seiner Eingänge ES1 ... ESm bzw. EE1 ... EEn auf jeden beliebigen seiner Ausgänge AS1 ... ASn bzw. AE1 ... AEm durchzuschalten. Deshalb kann das Koppelfeld die für jeden mobilen Teilnehmer von der Funkvermittlungsstelle bereitgestellten Signalkanäle, die jeweils in einem ganz bestimmten Kanalzeitschlitz innerhalb der TDMA-Rahmen auszusenden sind, von Rahmen zu Rahmen auf einen anderen der auf die verschiedenen Teilfrequenzbänder TB1b ... TB1n abgestimmten Sender S1 ... Sn durchschalten. Und das Koppelfeld kann die von jedem mobilen Teilnehmer von Rahmen zu Rahmen auf einem anderen Teilfrequenzband TB1a ... TBna ausgesendeten und von den auf die entsprechenden Teilfrequenzbänder TB1a ... TBna abgestimmten feststationsseitigen Empfänger E1 ... En aufgenommenen Signalkanäle auf seine dem jeweiligen mobilen Teilnehmer zugeordneten, mit den signalverarbeitenden Einrichtungen der Funkvermittlungsstelle verbundenen Ausgänge AE1 ... AEm durchschalten.

Die Sequenz von Teilfrequenzbändern, auf denen die für einen mobilen Teilnehmer bestimmten Signalkanäle ausgesendet werden, erhält der mobile Teilnehmer zu Beginn einer Übertragung über den Organisationskanal (vgl. Fig. 2) oder bei Übernahme (Hand off) in eine andere Funkzelle über die sprach- oder datenbegleitende Signalisierung (vgl. Sig1, Sig2 in Fig.1) mitgeteilt. Aus dieser Sequenz von Teilfrequenzbändern kann nun der mobile Teilnehmer die Sequenz von Teilfrequenzbändern, in denen er seine Signalkanäle aussendet, ableiten, weil die Sequenz der Sender-Teilfrequenzbänder und die Sequenz der Empfänger-Teilfrequenzbänder einen dem mobilen Teilnehmer bekannten Frequenzabstand haben sollen. Es ist auch möglich, für das gesamte Funknetz festliegende Sequenzen von Sender- und Empfänger-Teilfrequenzbändern zu vereinbaren, die allen mobilen Teilnehmern von vorneherein bekannt sind.

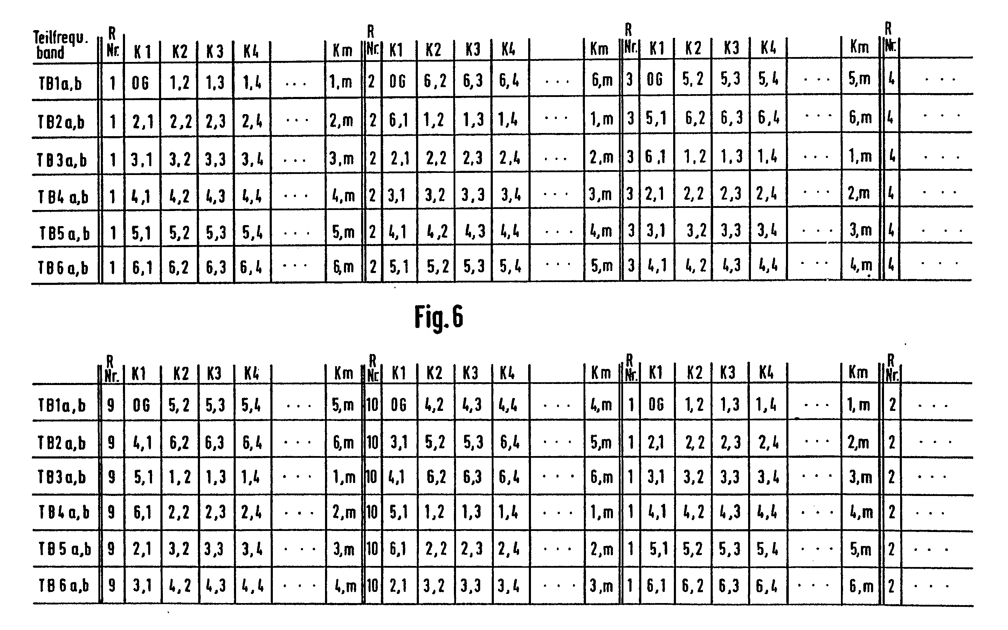

Nach welchem System und in welcher zeitlichen Reihenfolge das Koppelfeld an seinen Eingängen ES1 ... ESm anliegende Signalkanäle an seine Ausgänge AS1 ... ASn bzw. an seinen Eingängen EE1 ... EEn anliegende Signalkanäle an seine Ausgänge AE1 ... AEm durchschaltet, sei an Hand der Tabelle in Fig. 6 erläutert.

Bei dem in Fig. 6 dargestellten Ausführungsbeispiel stehen in einer Feststation 6 Sender-Teilfrequenzbänder TB1b ... TB6b und 6 Empfänger-Teilfrequenzbänder TB1a ... TB6a für das Frequenz-

sprungverfahren zur Verfügung. Jeder TDMA-Rahmen sei in m Kanalzeitschlitze K1 ... Km aufgeteilt, und jeweils 10 TDMA-Rahmen seien zu einem Überrahmen zusammengefaßt (vgl. auch Fig. 1). Jeder mobile Teilnehmer ist, wie die Tabelle in Fig. 6 zeigt, durch eine Kombination von zwei Ziffern (z.B. 4, 3) charakterisiert. Dabei gibt die erste Ziffer (im Beispiel: 4) an, daß dieser mobile Teilnehmer im ersten Rahmen des Überrahmens seinen für ihn bestimmten Signalkanal im 4. Teilfrequenzband TB4b empfangen bzw. seinen Signalkanal im 4. Teilfrequenzband aussenden kann. Im zweiten Rahmen kann der gleiche mobile Teilnehmer seinen Signalkanal im Teilfrequenzband TB5b bzw. TB5a, im dritten Rahmen Im Teilfrequenzband TB6b bzw. TB6a, im vierten Rahmen im Teilfrequenzband TB1b bzw. TB1a usw. empfangen bzw. aussenden. Die zweite Ziffer (im Beispiel: 3) gibt den Kanalzeitschlitz (im Beispiel: K3) an, welcher dem mobilen Teilnehmer zum Empfangen oder Aussenden seiner Signalkanäle zugeteilt ist.

In jedem mobilen Teilnehmer ist ein Speicher vorhanden (z.B. in der Steuerung 6 in Fig. 3), der neben der Nummer des angewiesenen Kanalzeitschlitzes, noch die Frequenzen der Teilfrequenzbandsequenz und die Nummer des Teilfrequenzbandes speichert, mit dem im ersten Rahmen jedes Überrahmens die Signalübertragung begonnen werden muß. Durch die damit gegebene Zuordnung, Rahmennummer zu jedem Teilfrequenzband innerhalb der Frequenzsequenz, kann auch bei kurzzeitigen Störungen oder Ausfall des Synchronismus sofort nach erneutem und korrektem Empfang einer im Anschluß an das Rahmensynchronwort übertragenen Rahmennummer an richtiger Stelle in die angewiesene Frequenzsequenz eingestiegen werden. Da die Rahmennummer von den Sendern S1 ... Sn der Feststation gesendet wird, ist der Einstieg für den mobilen Teilnehmer in die angewiesene Teilfrequenzbandfolge auch möglich, wenn nur in irgendeinem der Teilfrequenzbänder das Rahmensynchronwort und die Rahmennummer richtig erkannt worden ist.

Eine Sequenz von Teilfrequenzbändern, die innerhalb der Anzahl von Rahmen im Überrahmen nicht vollständig durchlaufen wird, wird mit dem letzten Rahmen abgebrochen und mit dem ersten Rahmen des neuen Überrahmens neu begonnen. Damit sind evtl. Fehlsynchronisierungen von mobilen Teilnehmern auf kurze Zyklen beschränkt.

Werden aus Gründen einer schnelleren und einfacheren Orientierung eines mobilen Teilnehmers im Funkfeld die Organisationskanäle nicht in das Frequenzsprungverfahren einbezogen, so ergibt sich im Kanal K1 eine um einen Schritt kürzere Frequenzsprungsequenz für diejenigen mobilen Teilnehmer, die den Zeitkanal K1 angewiesen erhalten haben. Diese mobilen Teilnehmer dürfen dann die Teilfrequenzbänder TB1b und TB1a, die dem Organisationskanal zugewiesen sind, in ihrer Frequenzsprungsequenz nicht benutzen. Dieser Fall ist in Fig. 6 dargestellt.

Aufgrund der in Fig. 6 beispielhaft angegebenen Zuordnung von Teilfrequenzbändern kann jeder mobile Teilnehmer, nachdem er in einem Teilfrequenzband TB1b ... TB6b den ihm angewiesenen Signalkanal innerhalb des Rahmens empfangen hat, z.B. zwei Kanalzeitschlitze später in Gegenrichtung in einem entsprechenden Teilfrequenzband TB1a ... TB6a senden.

Anschließend wird sofort das nächste Teilfrequenzband der Frequenzsequenz eingestellt und, falls nötig, über den Kanal und das Rahmensynchronwort nachsynchronisiert, so daß bis zum Eintreffen des nächsten Signalkanals in dem neuen Teilfrequenzband ein einwandfreier Empfang ermöglicht wird.

In den Feststationen sind an die Empfänger E1 ... En Speicher SP1 ... SPn angegliedert (s. Fig. 5), in denen von den Empfängern ermittelte kanal- und teilnehmerindividuelle Übertragungsparameter - Signal- zu Geräuschabstände, Bitfehlerraten, Entfernung der mobilen Teilnehmer, nicht erkanntes Synchronworte oder Synchronausfälle etc. - abgelegt werden. Die zu jedem mobilen Teilnehmer gehörenden Übertragungsparameter müssen ständig aktualisiert werden. Da aber beim Frequenzsprungverfahren die Signalkanäle und damit auch Änderungswerte für die Übertragungsparameter von den mobilen Teilnehmern von Rahmen zu Rahmen an einem anderen Empfänger E1 ... En in der Feststation anfallen, müssen jeweils die beim vorhergehend benutzten Empfänger abgespeicherten Übertragungsparameter in den Speicher des nachfolgenden Empfängers übergeben werden.

Für die Übergabe von Übertragungsparametern von einem Speicher in einen anderen erhält die Steuerung ST2 die Frequenzsprungsequenz mitgeteilt, die mit jedem Überrahmenbeginn neu anfängt. Daher wird der Steuerung ST2 jeweils der Überrahmenbeginn signalisiert.

Die Steuerung ST2 adressiert über einen Adreß- und Abruf-Bus AB für den Austausch der Übertragungsparameter jeweils den Speicher, der die Übertragungsparameter abzugeben, und denjenigen, der diese Übertragungsparameter aufzunehmen hat. Der Austausch der Übertragungsparameter selbst erfolgt über einen Datenbus DB, zu dem alle Speicher SP1 ... SPn Zugang haben. Für den ersten und letzten Transfer eines Frequenzsprung-Zyklus dient die Steuerung ST2 als Zwischenspeicher. Der Austausch der Übertragungsparameter kann entweder am Ende eines jeden Kanalzeitschlitzes für den gerade empfangenen Signalkanal oder während der Zeit, in der die Empfänger der Feststation empfangsfrei sind, nämlich während der Zeit des Rahmensynchronwortes, das von keinem mobilen Teilnehmer gesendet wird, vorgenommen werden.

Vom Empfänger werden die kanal- und teilnehmerindividuellen Übertragungsparameter ganz oder teilweise dem mit ihm verbundenen Speicher am Ende des empfangenen Signalkanals entnommen und in den vom mobilen Teilnehmer nicht zur Aussendung von Signalen benutzten, für den Laufzeitausgleich vorgesehenen Bitblock Z (s. Fig. 1) des Kanalbursts zur Übertragung an die Funkvermittlungsstelle eingesetzt.

Für das in Fig. 5 dargestellte Koppelfeld gibt es zwei Möglichkeiten, um z.B. die an einem Eingang ES1 ... ESm anliegenden von der Funkvermittlungsstelle für einen mobilen Teilnehmer bereitgestellten Signalkanäle, welche jeweils im Abstand von einer Rahmendauer folgen, Rahmen für Rahmen auf einen anderen feststationsseitigen, einem anderen Teilfrequenzband zugeordneten Ausgang AS1 ... ASn oder ebenso die feststationsseitigen Eingänge EE1 ... EEn auf die mit der Funkvermittlungsstelle verbundenen Ausgänge AE1 ... AEm durchzuschalten.

Für die Durchschalteprozedur ist jede Bittaktzeit, währenddessen der Signalzustand "1" oder "0" an einem Koppelfeldeingang anliegt, in mehrere Zeitlagen unterteilt.

Nun kann in einer ersten Schaltversion entweder jedem Gatter der einzelnen Ausgänge eine feste Durchschaltzeitlage zugeordnet sein, und die Gatter der einzelnen Eingänge stellen ihre Durchschaltzeiten jeweils auf die feste Durchschaltzeitlage desjenigen Ausgangs-Gatters ein, an den ein gerade anliegendes Bit durchzuschalten ist. Oder in einer zweiten Schaltversion sind den Gattern der Eingänge feste Durchschaltzeiten zugeordnet, und die Gatter der Ausgänge stellen ihre Durchschaltzeit jeweils auf die Durchschaltzeitlage desjenigen Eingangs-Gatters ein, von dem sie gerade ein Bit übernehmen sollen.

## Patentansprüche

1. Digitales Mobilfunksystem, bestehend aus Funkvermittlungsstellen und Feststationen, welche von den Funkvermittlungsstellen kommende Signalkanäle au mobile Teilnehmer aussenden und von den mobilen Teilnehmern abgegebene Signalkanäle empfangen und sie an die Funkvermittlungsstellen weiterleiten, wobei in jeder Funkvermittlungsstelle ein Koppelfeld vorhanden ist, welches jeweils mehrere Signalkanäle in einen Zeitmultiplex-Rahmen einfügt und die in Rahmen zusammengefaßten Signalkanäle an die der Funkvermittlungsstelle zugeordneten Feststationen weiterleitet, in denen mehrere, die Zeitmultiplex-Rahmen ausstrahlende, auf verschiedene Teilfrequenzbänder abgestimmte Sender vorhanden sind, und wobei das Koppelfeld die Signalkanäle, welche von mehreren auf verschiedene Teilfrequenzbänder abgestimmten Empfängern in den Feststationen empfangen werden, auf signalverarbeitende Einrichtungen in der Funkvermittlungsstelle aufteilt, dadurch gekennzeichnet, daß das Koppelfeld (28) die von ihm zusammengestellten Zeitmultiplex-Rahmen so den einzelnen auf verschiedene Teilfrequenzbänder (TB1b, TB2b) abgestimmten Sendern (S1 ... Sn) in den Feststationen (FS1 ... FSn) zuteilt, daß jeder mobile Teilnehmer seinen ihm zugeordneten Signalkanal von Rahmen zu Rahmen in einem anderen Teilfrequenzband (TB1b, TB2b) empfängt, und daß jeder mobile Teilnehmer seine Information von Rahmen zu Rahmen in einem anderen Teilfrequenzband (TB1a, TB2a, ...) an die in einer Feststation vorhandenen, auf diese verschiedenen Teilfrequenzbänder (TB1a, TB2a, ...) abgestimmten Empfänger (E1 ... En) aussendet.

2. Digitales Mobilfunksystem nach Anspruch 1, dadurch gekennzeichnet, daß jeder mobile Teilnehmer zu Beginn einer Funkverbindung oder bei einer Übergabe in einen anderen Funkverkehrsbereich von seiner ihm zugeordneten Funkvermittlungsstelle über einen zentralen Organisationskanal oder einen sprach- oder datenbegleitenden Signalisierungsburst die Mitteilung erhält, in welcher Sequenz von Teilfrequenzbändern (TB1b, TB2b, ...) die Sender (S1 ... Sn) einer Feststation Signalkanäle an ihn aussenden und in welcher Sequenz von Teilfrequenzbändern die Empfänger (E1 ... En) der Feststation Signalkanäle von dem mobilen Teilnehmer empfangen.

3. Digitales Mobilfunksystem nach Anspruch 1, dadurch gekennzeichnet, daß jedem Zeitmultiplex-Rahmen (R1, R2, ...) ein ganz bestimmtes Senderbzw. Empfänger-Teilnehmerband (TB1b, TB2b, ..., TB1a, TB2a, ...) aus der gesamten Sequenz von Teilfrequenzbändern zugeordnet ist und daß jeder mobile Teilnehmer durch eine zu Beginn eines empfangenen Zeitmultiplex-Rahmens stehende Rahmennummer mitgeteilt bekommt, auf welches Sender- bzw. Empfänger Teilfrequenzband (TB1b, TB2b, ..., TB1a, TB2a, ...) er sich einzustellen hat.

4. Digitales Mobilfunksystem nach einem der vorhergehenden Ansprüche, dadurch gekennzeichnet, daß die Sequenz der Teilfrequenzbänder (TB1b, TB2b, ...), in denen die fest stationsseitigen Sender (S1 ... Sn) die Signalkanäle an einen mobilen Teilnehmer aussenden, um einen festen Frequenzabstand gegenüber der Sequenz der Teilfrequenzbänder (TB1a, TB2a, ...), in denen der mobile Teilnehmer seine Signalkanäle an die feststationsseitigen Empfänger (E1 ... En) zurücksendet, versetzt ist.

5. Digitales Mobilfunksystem nach einem der vorhergehenden Ansprüche, dadurch gekennzeichnet, daß das Koppelfeld (28) eine erste Sammelschiene (SS1) besitzt, an die soviele den Feststationen die Zeitmultiplex-Rahmen liefernde Ausgänge (AS1 ... ASn) über Gatter (GAS1 ... GASn) angeschlossen sind wie Sender-Teilfrequenzbänder vorhanden sind, daß das Koppelfeld (28) eine zweite Sammelschiene (SS2) besitzt, an die soviele von den Feststationen die Signalkanäle übernehmende Eingänge (EE1 ... EEn) über Gatter (GEE1 ... GEEn) angeschlossen sind wie Empfänger-Teilfrequenzbänder vorhanden sind, daß an die erste Sammelschiene (SS1) über Gatter (GES1 ... GESm) Eingänge (ES1 ... ESm) zur Übernahme der von der Funkvermittlungsstelle (FVS) bereitgestellten Signalkanäle angeschlossen sind, wobei jedem Signalkanal eines jeden Sender-Teilfrequenzbandes ein Eingang zugeordnet ist, daß an die zweite Sammelschiene (SS2) über Gatter (GAE1 ... GAEm) Ausgänge (AE1 ... AEm) zur Übergabe der an den Eingängen (EE1 ... EEn) anliegenden Signalkanäle an die Funkvermittlungsstelle (FVS) angeschlossen sind, wobei jedem Signalkanal in jedem Empfänger-Teilfrequenzband ein Ausgang (AE1 ... AEm) zugeordnet ist, daß alle Gatter mit Zeitlagenspeichern (ZLSP) versehen sind, in denen Durchschaltzeiten für die Gatter eingeschrieben sind, daß die einzelnen Gatterdurchschaltzeiten so gelegt sind, daß jeweils die in einen Zeitmultiplex-Rahmen einzufügenden, an den mit der Fukvermittlungsstelle verbundenen Eingängen (ES1 ... ESm) anliegenden Signalkanäle an einen mit einem feststationsseitigen Sender (S1 ... Sn) verbundenen Ausgang (AS1 ... ASn) des Koppelfeldes gelangen und die in den eine Rahmendauer später folgenden Zeitmultiplex-Rahmen einzuordnenden Signalkanäle an einen anderen mit einem anderen Sender (S1 ... Sn) verbundenen Ausgang (AS1 ... ASn) gelangen und daß die von den mobilen Teilnehmern ausgesendeten, von Rahmen zu Rahmen an einem anderen der feststationsseitigen Eingänge (EE1 ... EEn) des Koppelfeldes anliegenden Signalkanäle die den mobilen Teilnehmern zugeordneten, mit den signalverarbeitenden Einrichtungen der Funkvermittlungsstelle verbundenen Ausgänge (AE1 ... AEm) gelangen.

6. Digitales Mobilfunksystem nach Anspruch 5, dadurch gekennzeichnet, daß die mit den Feststationen (FS1 ... FSn) verbundenen Eingänge (EE1 ... EEn) Normierungseinrichtungen (RN1 ... RNn) besitzen, welche die unterschiedlichen Laufzeiten der von den Feststationen kommenden Signalkanäle ausgleichen.

7. Digitales Mobilfunksystem nach Anspruch 4 oder 5, dadurch gekennzeichnet, daß die Gatter (GES1 ... GESm) an den Eingängen (ES1 ... ESm) der ersten Sammelschiene (SS1) dann einen Generator (STI) für statistische Information an die erste Sammelschiene (SS1) durchschalten, wenn für einen Kanal im Zeitmultiplex-Rahmen kein Nutzsignal vorliegt.

8. Digitales Mobilfunksystem nach Anspruch 5, dadurch gekennzeichnet, daß die Zeitlagenspeicher (ZLSP) der mit den Eingängen (ES1 ... ESm) der ersten Sammelschiene (SS1) verbundenen Gatter (GES1 ... GESm) während der in ihnen adressierten Zeitlagen Abrufsignale bereitstellen, welche den signalverarbeitenden Einrichtungen (24 ... 27) der Funkvermittlungsstelle signalisieren, daß sie ihre Signale an die Eingänge (ES1 ... ESm) des Koppelfeldes abgeben können.

9. Digitales Mobilfunksystem nach einem der vorhergehenden Ansprüche, dadurch gekennzeichnet, daß zu jedem Empfänger (E1 ... En) der Feststationen ein Speicher (SP1 ... SPn) gehört zum Speichern von kanal- und teilnehmerindividuellen Übertragungsparametern - Signal- zu Geräuschabstände, Bitfehlerraten, Entfernung der mobilen Teilnehmer, Synchronausfälle etc. - welche die Empfänger in jedem Rahmen ermitteln, und daß eine Steuerung (ST2) die während eines Rahmens ermittelten und in einem Speicher abgelegten Übertragungsparameter zum Kanal- oder Rahmenende jeweils an denjenigen Speicher übergibt, dessen zugehöriger Empfänger für den Empfang der Signalkanäle im folgenden Rahmen bestimmt ist.

10. Digitales Mobilfunksystem nach Anspruch 9, dadurch gekennzeichnet, daß die Empfänger (E1 ... En) die kanal- und teilnehmerindividuellen Übertragungsparameter ganz oder teilweise den mit ihnen verbundenen Speichern entnehmen und zur Übertragung an die Funkvermittlungsstelle (FVS) in den von den mobilen Teilnehmern nicht zur Aussendung von Signalen benutzten, für den Laufzeitausgleich vorgesehenen Bitblock (Z) der Kanalbursts einsetzen.

11. Digitales Mobilfunksystem nach einem der vorhergehenden Ansprüche, dadurch gekennzeichnet, daß in jeder Feststation ein festliegender Kanalzeitschlitz, den ein Sender der Feststation immer im gleichen Teilfrequenzband (TBxb) ausstrahlt, mit dem Organisationskanal belegt ist und daß alle mobilen Teilnehmer, die sich im Bereich der Feststation aufhalten und sich nicht im Verbindungszustand mit der Feststation befinden, den Kanalzeitschlitz gleicher Ordnungszahl im Teilfrequenzband (TBxa) als Organisationskanal in der Übertragungsrichtung zur Feststation benützen.

## Claims

1. Digital mobile radio system consisting of radio telephone exchanges and fixed stations which transmit signal channels coming from the radio telephone exchanges to mobile subscribers and receive signal channels delivered by the mobile subscribers and pass them on to the radio telephone exchanges, wherein a coupling field is present in each radio telephone exchange, which coupling field each time inserts several signal channels into a time multiplex frame and passes the signal channels combined into frames on to the fixed stations, which are associated with the radio telephone exchange and in which several transmitters are present, which are tuned to different partial frequency bands and radiate the time multiplex frames, and wherein the coupling field divides the signal channels, which are received by several receivers tuned to different partial frequency bands in the fixed stations, up over signal-processing equipments in the radio telephone exchanges, characterised thereby, that the coupling field (28) so allocates the time multiplex frames assembled by it to the individual transmitters tuned to different partial frequency bands (TB1b, TB2b) in the fixed stations (FS1 ... FSn) that each mobile subscriber receives his alotted signal channel from frame to frame in another partial frequency band (TB1b, TB2b) and that each mobile subscriber transmits its information from frame to frame in another partial frequency band (TB1a, TB2a, ...) to the receivers (E1 ... En), which are present in a fixed station and tuned to these different partial frequency bands (TB1a, TB2a, ...).

2. Digital mobile radio system according to claim 1, characterised thereby, that each mobile subscriber at the beginning of a radio connection or on a transfer into another radio traffic region receives the communication, in which sequence of partial frequency bands (TB1b, TB2b, ...) the transmitters (S1 ... Sn) of a fixed station transmit signal channels to it and in which sequence of partial frequency bands the receivers (E1 ... En) of the fixed station receive signal channels from the mobile subscriber, from its allotted radio telephone exchanges by way of a central organisation channel or a signal burst accompanying speech or data.

3. Digital mobile radio system according to claim 1, characterised thereby, that each time multiplex frame (R1, R2, ...) is allotted a quite definite transmitter or receiver partial frequency band (TB1b, TB2b, ..., TB1a, TB2a, ...) out of the entire sequence of partial frequency bands and that each mobile subscriber is informed, to which transmitter or receiver partial frequency band (TB1b, TB2b, ..., TB1a, TB2a, ...) he has to tune, by a frame number standing at the start of a received time multiplex frame.

4. Digital mobile radio system according to one of the preceding claims, characterised thereby, that the sequence of the partial frequency bands (TB1b, TB2b, ...), in which the transmitters (S1 ... Sn) at the fixed station end transmit the signal channels to a mobile subscriber, is displaced by a fixed frequency spacing relative to the sequence of the partial frequency bands (TB1a, TB2a, ...), in which the mobile subscriber transmits his signal channels back to the receivers (E1 ... En) at the fixed station end.

5. Digital mobile radio system according to one of the preceding claims, characterised thereby, that the coupling field (28) has a first bus bar (SS1), to which as many outputs (AS1 ... ASn) delivering the time multiplex frames to the fixed stations are connected by way of gates (GAS1 ... GASn) as transmitter partial frequency bands are present, that the coupling field (28) has a second bus bar (SS2), to which as many inputs (EE1 ... EEn) taking over the signal channels from the fixed stations are connected by way of gates (GEE1 ... GEEn) as receiver partial frequency bands are present, that inputs (ES1 ... ESm) for the take-over of the signal channels placed ready by the radio telephone exchange (FVS) are connected by way of gates (GES1 ... GESm) to the first bus bar (SS1), wherein each signal channel of each transmitter partial frequency band is allotted an input, that outputs (AE1 ... AEm) for the transfer of the signal channels present at the inputs (EE1 ... EEn) to the radio telephone exchange (FVS) are connected by way of gates (GAE1 ... GAEm) to the second bus bar (SS2), wherein each signal channel in each receiver partial frequency band is allotted an output (AE1 ... AEm), that all gates are provided with time position stores (ZLSP), in which switch-through times for the gates are recorded, that the individual gate switch-through times are so disposed that the signal channels, which are present at the inputs (ES1 ... ESm) connected with the radio telephone exchange and to be inserted into a respective time multiplex frame, get to an output (AS1 ... ASn) of the coupling field, which output is connected with a transmitter (S1 ... Sn) at the fixed station end and the signal channels, which are to be ordered into a time multiplex frame following one frame period later get to another output (AS1 ... ASn) connected to another transmitter (S1 ... Sn) and that the signal channels, which are transmitted by the mobile subscribers and present from frame to frame at another of the inputs (EE1 ... EEn) at the fixed station end of the coupling field, get to the outputs (AE1 ... AEm), which are allotted to the mobile subscribers and connected with the signal-processing equipments of the radio telephone exchange.

6. Digital mobile radio system according to claim 5, characterised thereby, that the inputs (EE1 ... EEn) connected with the fixed stations (FS1 ... FSn) have normalising equipments (RN1 ... RNn), which equalise the different transit times of the signal channels coming from the fixed stations.

7. Digital mobile radio system according to claim 4 or 5, characterised thereby, that the gates (GES1 ... GESm) at the inputs (ES1 ... ESm) of the first bus bar (SS1) switch a generator STI) for statistical information through to the first bus bar (SS1) when no useful signal is present for a channel in the time multiplex frame.

8. Digital mobile radio system according to claim 5, characterised thereby, that the time position stores (ZLSP) of the gates (GES1 ... GESm) connected with the inputs (ES1 ... ESm) of the first bus bar (SS1) during the time positions addressed in them place recall signals ready, which indicate to the signal-processing equipments (24 ... 27) of the radio telephone exchange that it can deliver its signals to the inputs (ES1 ... ESm) of the coupling field.

9. Digital mobile radio system according to one of the preceding claims, characterised thereby, that a store (SP1 ... SPn) belongs to each receiver (E1 ... En) of the fixed stations for the storage of transmission parameters – signal-to-noise ratios, bit error rates, distance of the mobile subscribers, synchronisation failures and so forth –, which are individual to the channel and subscriber and which the receivers determine in each frame, and that a control (ST2) at the end of the channel or frame each time transfers the transmission parameters, which have been determined during a frame and filed in a store, to that store, the associated receiver of which is intended for the reception of the signal channels in the following frame.

10. Digital mobile radio system according to claim 9, characterised thereby, that the receivers (E1 ... En) take the transmission parameters, which are individual to the channel and subscriber, wholly or partially out of the stores connected with them and insert them in the bit block (Z) of the channel bursts, which is provided for the transit time equalisation and not used by the mobile subscribers for the emission of signals, for transmission to the radio telephone exchange (FVS).

11. Digital mobile radio system according to one of the preceding claims, characterised thereby, that a fixed channel time slot, which a transmitter of the fixed station always radiates in the same partial frequency band (TBxb), in each fixed station is occupied by the organisation channel and that all mobile subscribers, which are situated in the region of the fixed station and not in the state of connection with the fixed station, utilise the channel time slot of the same ordinal number in the partial frequency band (TBxb) as organisation channel in the direction of transmission to the fixed station.

## Revendications

1. Système numérique de radiocommunication mobile, comprenant des centres de commutation radioélectriques et des stations fixes, lesquelles émettent des voies de transmission venant des centres de commutation à des abonnés mobiles et reçoivent des voies de transmission délivrées par les abonnés mobiles et les retransmettent aux centres de commutation, dans lequel chaque centre de commutation radioélectrique contient un réseau de connexion qui insère chaque fois plusieurs voies dans une trame de multiplexage temporel et retransmet les voies, rassemblées en trames, aux stations fixes coordonnées au centre de commutation, dans lesquelles se trouvent plusieurs émetteurs accordés sur différentes bandes de fréquences partielles et émettant les trames de multiplexage temporel, et dans lequel le réseau de connexion répartit les voies, reçues par plusieurs récepteurs accordés sur différentes bandes de fréquences partielles dans les stations fixes, sur des équipements de traitement de signaux dans le centre de commutation radioélectrique, caractérisé en ce que le réseau de connexion (28) assigne les trames de multiplexage temporel, composées par lui, au différents émetteurs (S1 ... Sn), accordés sur différentes bandes de fréquences partielles (TB1b ... TB2b), dans les stations fixés (FS1 ... FSn), de manière que chaque abonné mobile reçoive la voie de transmission qui lui est affectée dans une bande de fréquences partielle (TB1b, TB2b) différente d'une trame à l'autre, et de manière que chaque abonné mobile émette son information dans une bande de fréquences partielle (TB1a, TB2a, ...) qui difère d'une trame à l'autre, aux récepteurs (E1 ... En) accordés sur ces différentes bandes de fréquences partielles (TB1a, TB2a) et se trouvant dans une station fixe.

2. Système selon la revendication 1, caractérisé en ce que chaque abonné mobile reçoit, au début d'une communication radioélectrique ou lors d'un transfert par le centre de commutation radioélectrique qui lui est affecté dans une autre zone de trafic radioélectrique, par une voie d'organisation centrale ou une salve de signalisation accompagnant la phonie ou les données, l'information indiquant dans quelle séquence de bandes de fréquences partielles (TB1b, TB2b) les émetteurs (S1 ... Sn) d'une station fixe émettent des voies de transmission vers lui et dans quelle séquence de bandes de fréquences partielle les récepteurs (E1 ... En) de la station fixe reçoivent des voies de transmission des abonnés mobiles.

3. Système selon la revendication 1, caractérisé en ce qu'une bande de fréquences partielle d'émetteur ou de récepteur (TB1b, TB2b, ..., TB1a, TB2a ...) bien déterminée de l'ensemble de la séquence de bandes de fréquences partielles est affectée à chaque trame de multiplexage temporel (R1, R2) et que chaque abonné mobile est informé, par un numéro de trame se trouvant au début d'une trame de multiplexage temporel reçue, sur quelle bande de fréquences partielle d'émetteur ou de récepteur (TB1b, TB2b, ..., TB1a, TB2a, ...) il doit s'ajuster.

4. Système selon une des revendications précédentes, caractérisé en ce que la séquence des bandes de fréquences partielles (TB1b, TB2b, ...) dans lesquelles les émetteurs (S1 ... Sn) d'une station fixe émettent les voies de transmission à un abonné mobile, est décalée d'un intervalle de fréquence fixe par rapport à la séquence des bandes de fréquences partielles (TB1a, TB2a, ...) dans lesquelles l'abonné mobile renvoie ses voies de transmission aux récepteurs (E1 ... En) de la station fixe.

5. Système selon une des revendications précédentes, caractérisé en ce que le réseau de connexion (28) possède une première barre omnibus (SS1) à laquelle sont raccordées, par des portes (GAS1 ... GASn), autant de sorties (AS1 ... ASn) fournissant les trames de multiplexage temporel aux stations fixes, qu'il y a de bandes de fréquences partielles d'émetteur, que le réseau de connexion (28) possède une deuxième barre omnibus (SS2) à laquelle sont raccordées, par des portes (GEE1 ... GEEn), autant d'entrées (EE1 ... EEn), recevant les voies de transmission des stations fixes, qu'il y a de bandes de fréquences partielles de récepteur, que des entrées (ES1 ... ESn) pour recevoir les voies de transmission mises à disposition par le centre de commutation radioélectrique (FVS), sont raccordées par des portes (GES1 ... GESn) à la première barre omnibus (SS1), avec attribution d'une entrée à chaque voie de transmission de chaque bande de fréquences partielle d'émetteur, que des sorties (AE1 ... AEm) pour le transfert au centre de commutation radioélectrique (FVS) des voies de transmission appliquées aux entrées (EE1 ... EEn), sont raccordées par des portes (GAE1 ... GAEm) à la deuxième barre omnibus (SS2), avec attribution d'une sortie (AE1 ... AEm) à chaque voie de transmission dans chaque bande de fréquences partielle de récepteur, que toutes les portes sont pourvues de mémoires de positions temporelles (ZLSP), dans lesquelles sont inscrits des temps de commutation pour les portes, que les différents temps de commutation des portes sont choisis de manière que les voies de transmission appliquées aux entrées (ES1 ... ESn) reliées au centre de commutation radioélectrique et devant être insérées dans une trame de multiplexage temporel, parviennent chaque fois à une sortie (AS1 ... ASn) du réseau de connexion reliée à un émetteur (S1 ... Sn) d'une station fixe, que les voies de transmission à ordonner dans une trame de multiplexage temporel qui suit une durée de trame plus tard, parviennent sur une autre sortie (AS1 ... ASn) reliée à un autre émetteur (S1 ... Sn), et que les voies de transmission émises par les abonnés mobiles et appliquées trame par trame à une autre des entrées (EE1 ... EEn) des stations fixes du réseau de connexion, parviennent aux sorties (AE1 ... AEm) affectées aux abonnés mobiles et reliées aux dispositifs de traitement de signaux du centre de commutation radioélectrique.

6. Système selon la revendication 5, caractérisé en ce que les entrées (EE1 ... EEn) reliées aux stations fixes (FS1 ... FSn) possèdent des dispositifs de normalisation (RN1 ... RNn) qui compensent les temps de propagation différents des voies de transmission venant des stations fixes.

7. Système selon la revendication 4 ou 5, caractérisé en ce que les portes (GES1 ... GESm) aux entrées (ES1 ... ESm) de la première barre omnibus (SS1) connectent à cette barre un générateur (STI) pour informations statistiques lorsqu'il n'y a pas de signal utile pour une voie dans la trame de multiplexage temporel.

8. Système selon la revendication 5, caractérisé en ce que les mémoires de positions temporelles (ZSLP) des portes (GES1 ... GESm) reliées aux entrées (ES1 ... ESm) de la première barre omnibus (SS1), fournissent, pendant les positions temporelles adressées dans ces mémoires, des signaux d'appel qui signalent aux dispositifs de traitement de signaux (24, 27) du centre de commutation radioélectrique, qu'ils peuvent délivrer leurs signaux aux entrées (ES1 ... ESm) du réseau de connexion.

9. Système selon une des revendications précédentes, caractérisé en ce que chaque récepteur (E1 ... En) des stations fixes et associé à une mémoire (SP1 ... SPn) pour la mémorisation de paramètres de transmission particuliers à des voies et des abonnés individuels – tels que des rapports signal/bruit, taux d'erreurs sur les bits, distance des abonnés mobiles, pertes de synchronisation, et ainsi de suite – déterminés par les récepteurs dans chaque trame, et qu'une commande (ST2) transfère, à la fin de la voie ou de la trame, les paramètres de transmission déterminés pendant une trame et stockés dans une mémoire, à la mémoire associée au récepteur destiné à recevoir les voies de transmission dans la trame suivante.

10. Système selon la revendication 9, caractérisé en ce que les récepteurs (E1 ... En) prélèvent les paramètres de transmission particuliers aux voies et aux abonnés, en totalité ou en partie, dans les mémoires reliées à eux et les insèrent, en vue de la transmission au centre de commutation radioélectrique (FVS), dans le bloc de bits (Z) des salves de voie non utilisé par les abonnés mobiles pour l'émission de signaux et prévu pour la compensation des temps de propagation.

11. Système selon une des revendications précédentes, caractérisé en ce que, dans chaque station fixe, un intervalle de temps de voie déterminé, qu'un émetteur de la station fixe rayonne toujours dans la même bande de fréquences partielle (TBxb), est occupé par la voie d'organisation, et que tous les abonnés mobiles se trouvant à la portée de la station fixe et n'étant pas en état de communication avec elle, utilisent l'intervalle de temps de voie du même numéro d'ordre dans la bande de fréquences partielle (TBxa) en tant que voie d'organisation dans le sens de transmission vers la station fixe.

Fig. 1

EP 0 233 963 B1

a) OG-Kanalburst 3,1875 msec, 408 Bit

Syn | Information | Kenng. Sync | Information | Kenng.

Standardtelegramm — Standardtelegramm

b) Syn | Z | Z | Z | Z

Kurztelegramm — Kurztelegramm — Kurztelegramm — Kurztelegramm

c) Syn Information | Z | Z Syn | Information | Z

Kurztelegramm — Kurztelegramm — Standardtelegramm

Fig. 2

EP 0 233 963 B1

Fig. 3

EP 0 233 963 B1

FS1

MT

FVS

16

Datenkoppelfeld

Sig.-
Abzw.

18

Datennetz

Datenkanal

ST1 Steuerung

Sender S1

Kanal-
MUX

Datenaufber.

26

23

15

Sender Sn

MUX

MUX

Koppelfeld

Kanal-
MUX

Sprachsignal-
aufber.

Digitales
Fernsprechkoppelfeld

Sig.-
Abzw.

Fernspr.-
netz oder
andere FVS

FS2

25

22

19

Empf. E1

MUX

28

24

Kanal-
MUX

Sprachcodec.

ME

Empf. En

21

Messempf.

OG-Kanal

Einzelkanal-
Signalisierung

ST2 Steuerung

Verteiler

27

MT

BS-
Steuerung

Steuerung

Sign.
MUX

Syst.-
Signalis.
Zentr.

MT

17

20

FSn

EP 0 233 963 B1

Fig. 4

Fig. 5

| Teilfrequ. band | R Nr. | K1 | K2 | K3 | K4 | | Km | R Nr. | K1 | K2 | K3 | K4 | | Km | R Nr. | K1 | K2 | K3 | K4 | | Km | R Nr. | |
|---|---|---|---|---|---|---|---|---|---|---|---|---|---|---|---|---|---|---|---|---|---|---|---|
| TB1a,b | 1 | OG | 1,2 | 1,3 | 1,4 | ... | 1,m | 2 | OG | 6,2 | 6,3 | 6,4 | ... | 6,m | 3 | OG | 5,2 | 5,3 | 5,4 | ... | 5,m | 4 | ... |
| TB2a,b | 1 | 2,1 | 2,2 | 2,3 | 2,4 | ... | 2,m | 2 | 6,1 | 1,2 | 1,3 | 1,4 | ... | 1,m | 3 | 5,1 | 6,2 | 6,3 | 6,4 | ... | 6,m | 4 | ... |
| TB3a,b | 1 | 3,1 | 3,2 | 3,3 | 3,4 | ... | 3,m | 2 | 2,1 | 2,2 | 2,3 | 2,4 | ... | 2,m | 3 | 6,1 | 1,2 | 1,3 | 1,4 | ... | 1,m | 4 | ... |
| TB4a,b | 1 | 4,1 | 4,2 | 4,3 | 4,4 | ... | 4,m | 2 | 3,1 | 3,2 | 3,3 | 3,4 | ... | 3,m | 3 | 2,1 | 2,2 | 2,3 | 2,4 | ... | 2,m | 4 | ... |
| TB5a,b | 1 | 5,1 | 5,2 | 5,3 | 5,4 | ... | 5,m | 2 | 4,1 | 4,2 | 4,3 | 4,4 | ... | 4,m | 3 | 3,1 | 3,2 | 3,3 | 3,4 | ... | 3,m | 4 | ... |
| TB6a,b | 1 | 6,1 | 6,2 | 6,3 | 6,4 | ... | 6,m | 2 | 5,1 | 5,2 | 5,3 | 5,4 | ... | 5,m | 3 | 4,1 | 4,2 | 4,3 | 4,4 | ... | 4,m | 4 | ... |

## Fig. 6

| | R Nr. | K1 | K2 | K3 | K4 | | Km | R Nr. | K1 | K2 | K3 | K4 | | Km | R Nr. | K1 | K2 | K3 | K4 | | Km | R Nr. | |
|---|---|---|---|---|---|---|---|---|---|---|---|---|---|---|---|---|---|---|---|---|---|---|---|
| TB1a,b | 9 | OG | 5,2 | 5,3 | 5,4 | ... | 5,m | 10 | OG | 4,2 | 4,3 | 4,4 | ... | 4,m | 1 | OG | 1,2 | 1,3 | 1,4 | ... | 1,m | 2 | ... |
| TB2a,b | 9 | 4,1 | 6,2 | 6,3 | 6,4 | ... | 6,m | 10 | 3,1 | 5,2 | 5,3 | 6,4 | ... | 5,m | 1 | 2,1 | 2,2 | 2,3 | 2,4 | ... | 2,m | 2 | ... |
| TB3a,b | 9 | 5,1 | 1,2 | 1,3 | 1,4 | ... | 1,m | 10 | 4,1 | 6,2 | 6,3 | 6,4 | ... | 6,m | 1 | 3,1 | 3,2 | 3,3 | 3,4 | ... | 3,m | 2 | ... |
| TB4a,b | 9 | 6,1 | 2,2 | 2,3 | 2,4 | ... | 2,m | 10 | 5,1 | 1,2 | 1,3 | 1,4 | ... | 1,m | 1 | 4,1 | 4,2 | 4,3 | 4,4 | ... | 4,m | 2 | ... |
| TB5a,b | 9 | 2,1 | 3,2 | 3,3 | 3,4 | ... | 3,m | 10 | 6,1 | 2,2 | 2,3 | 2,4 | ... | 2,m | 1 | 5,1 | 5,2 | 5,3 | 5,4 | ... | 5,m | 2 | ... |
| TB6a,b | 9 | 3,1 | 4,2 | 4,3 | 4,4 | ... | 4,m | 10 | 2,1 | 3,2 | 3,3 | 3,4 | ... | 3,m | 1 | 6,1 | 6,2 | 6,3 | 6,4 | ... | 6,m | 2 | ... |

EP 0 233 963 B1